# EUROPÄISCHE PATENTSCHRIFT

(11) **EP 3 313 105 B1**
(45) Veröffentlichungstag und Bekanntmachung des Hinweises auf die Patenterteilung: **08.01.2020**
(21) Anmeldenummer: 17189080.9
(22) Anmeldetag: 01.09.2017
(51) Int. Cl.: H04W 4/02, G07C 9/00, H04W 4/029, H04W 4/40

(54) **VERFAHREN ZUM PRÜFEN EINER AUTORISIERUNG EINER MOBILEN ENTRIEGELUNGSVORRICHTUNG SOWIE STEUERGERÄTE FÜR EIN FAHRZEUG**
METHOD FOR TESTING AN AUTHORISATION OF A MOBILE UNLOCKING DEVICE AND CONTROL UNITS FOR A VEHICLE
PROCÉDÉ DE CONTRÔLE D'UNE AUTORISATION D'UN DISPOSITIF DE DÉVERROUILLAGE MOBILE AINSI QU'APPAREIL DE COMMANDE POUR UN VÉHICULE

(30) Priorität: 21.10.2016 DE 102016120146
(43) Veröffentlichungstag der Anmeldung: 25.04.2018
(73) Patentinhaber: Bayerische Motoren Werke Aktiengesellschaft, 80809 München (DE); Deutsche Telekom AG, 53113 Bonn (DE)
(72) Erfinder: Gehrsitz, Thomas, 81377 München (DE); Schnieders, Dominik, 52078 Aachen (DE)
(74) Vertreter: 2SPL Patentanwälte PartG mbB

(56) Entgegenhaltungen:
- WO-A1-2015/150870
- DE-A1-102010 010 057
- DE-A1-102014 112 849

## Beschreibung

### Technisches Gebiet

Ausführungsbeispiele befassen sich mit der Entriegelung von Objekten. Insbesondere befassen sich Ausführungsbeispiele mit Verfahren zum Prüfen einer Autorisierung einer mobilen Entriegelungsvorrichtung sowie mit Steuergeräten für ein Fahrzeug.

### Hintergrund

Zum Entriegeln bzw. Starten eines Fahrzeugs kann z.B. ein Fahrzeugschlüssel, ein Smartphone oder ein Transponder benutzt werden. Insbesondere bei einem schlüssellosen Zugangssystem, bei dem ein Fahrzeug ohne aktive Benutzung eines Fahrzeugschlüssels entriegelt bzw. gestartet werden kann, könnte durch sogenannte Relay-Angriffe eine nicht-autorisiertes Öffnen des Fahrzeugs durch Dritte versucht werden oder es könnte versucht werden, ein Öffnen des Fahrzeugs zu stören.

Beispielsweise wird in der Druckschrift DE 10 214 112 849 A1 ein Verfahren zur Fernsteuerung wenigstens einer Funktion einer Sicherheitsvorrichtung eines Fahrzeugs vorgeschlagen. In der Druckschrift WO 2015/150870 A1 wird ferner ein Fahrzeugdiebortungssystem vorgeschlagen. In der Druckschrift DE 10 210 010 057 A1 wird ein Verfahren zum Steuern einer Tür eines Fahrzeugs vorgeschlagen.

Es besteht ein Bedürfnis, eine verbesserte Möglichkeit zur Entriegelung eines Objekts bereitzustellen.

### Zusammenfassung

Ausführungsbeispiele von Verfahren zum Prüfen einer Autorisierung einer mobilen Entriegelungsvorrichtung ermöglichen dies.

Ein Verfahren zum Prüfen einer Autorisierung einer mobilen Entriegelungsvorrichtung gemäß einem ersten Ausführungsbeispiel umfasst ein Bestimmen einer Position der mobilen Entriegelungsvorrichtung auf Basis eines über ein zellulares Netzwerk ausgesendeten Signals der mobilen Entriegelungsvorrichtung. Das Signal genügt dabei dem NB-IoT Standard des 3rd Generation Partnership Project, wobei die mobile Entriegelungsvorrichtung ein Smartphone ist. Das Signal wird in Folge einer Kommunikation zwischen dem zu entriegelnden Objekt und der mobilen Entriegelungsvorrichtung ausgesendet. Dabei wird eine Kommunikationsvorrichtung der mobilen Entriegelungsvorrichtung zur Kommunikation mit dem zellularen Netzwerk in Folge der Kommunikation zwischen dem zu entriegelnden Objekt und der mobilen Entriegelungsvorrichtung aus dem Power Save Mode gemäß dem NB-IoT Standard des 3rd Generation Partnership Project in einen Betriebszustand versetzt. Die Kommunikationsvorrichtung wird nach dem Aussenden des Signals über das zellulare Netzwerk von dem Betriebszustand wieder in den Power Save Mode gemäß dem NB-IoT Standard des 3rd Generation Partnership Project versetz. Weiterhin umfasst das Verfahren ein Vergleichen der Position der mobilen Entriegelungsvorrichtung mit einer Position des zu entriegelnden Objekts. Wenn die Position der mobilen Entriegelungsvorrichtung einen Abstand zu der Position des zu entriegelnden Objekts aufweist, der kleiner als ein vorgegebener Abstand ist, umfasst das Verfahren ein Feststellen der Autorisierung der mobilen Entriegelungsvorrichtung. Wenn das Bestimmen der Position der mobilen Entriegelungsvorrichtung auf Basis des Signals nicht möglich ist oder der Vergleich der Position der mobilen Entriegelungsvorrichtung mit der Position des zu entriegelnden Objekts nicht eindeutig ist, umfasst das Verfahren ferner ein Bestimmen einer Bewegungstrajektorie der mobilen Entriegelungsvorrichtung auf Basis zumindest zweier weiterer über das zellulare Netzwerk ausgesendeter Signale der mobilen Entriegelungsvorrichtung. Die zumindest zwei weiteren Signale wurden zeitlich vor einem Zeitpunkt einer Kommunikation zwischen dem zu entriegelnden Objekt und der mobilen Entriegelungsvorrichtung ausgesendet. Ferner umfasst das Verfahren ein Vergleichen der Bewegungstrajektorie der mobilen Entriegelungsvorrichtung mit der Position des zu entriegelnden Objekts. Wenn ein Verlauf der Bewegungstrajektorie relativ zu der Position des zu entriegelnden Objekts einem vorgegebenen Kriterium genügt, umfasst das Verfahren weiterhin ein Feststellen der Autorisierung der mobilen Entriegelungsvorrichtung.

### Figurenkurzbeschreibung

Ausführungsbeispiele werden nachfolgend bezugnehmend auf die beiliegenden Figuren näher erläutert. Es zeigen:
Fig. 1 zeigt ein Ablaufdiagramm eines ersten Ausführungsbeispiels eines Verfahrens zum Prüfen einer Autorisierung einer mobilen Entriegelungsvorrichtung;
Fig. 2 zeigt ein Ablaufdiagramm eines zweiten Ausführungsbeispiels eines Verfahrens zum Prüfen einer Autorisierung einer mobilen Entriegelungsvorrichtung;
Fig. 3 zeigt ein erstes Ausführungsbeispiel eines Steuergeräts für ein Fahrzeug;
Fig. 4 zeigt ein zweites Ausführungsbeispiel eines Steuergeräts für ein Fahrzeug; und
Fig. 5 zeigt ein Ausführungsbeispiel eines Fahrzeugs mit einem Steuergerät für ein Fahrzeug.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

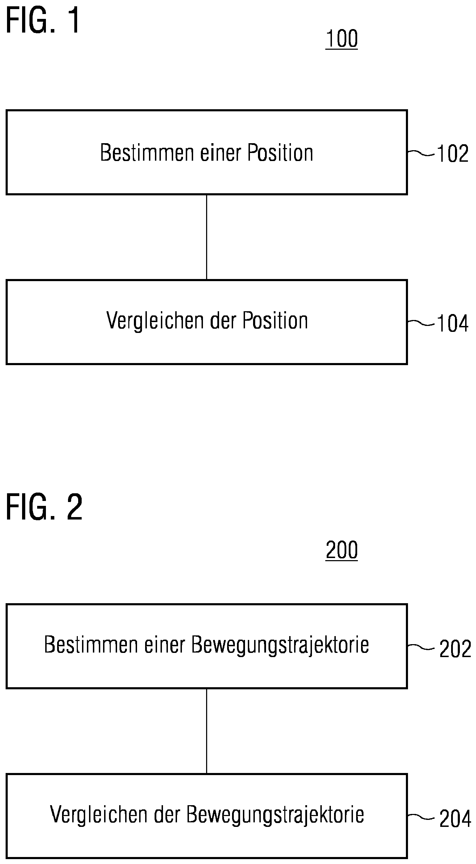

**Fig. 1** zeigt ein Verfahren 100 zum Prüfen einer Autorisierung einer mobilen Entriegelungsvorrichtung. Das Verfahren 100 umfasst ein Bestimmen 102 einer Position der mobilen Entriegelungsvorrichtung auf Basis eines über ein zellulares Netzwerk ausgesendeten Signals der mobilen Entriegelungsvorrichtung. Weiterhin umfasst das Verfahren 100 ein Vergleichen 104 der Position der mobilen Entriegelungsvorrichtung mit einer Position des zu entriegelnden Objekts.

Durch den Vergleich der Position des Objekts mit der Position der mobilen Entriegelungsvorrichtung kann bestimmt werden, ob sich die mobile Entriegelungsvorrichtung z.B. innerhalb einer gewöhnlichen oder vorbestimmten Funkreichweite zum Objekt befindet. Dadurch kann z.B. die Verlängerung der Funkreichweite bei einem Relay Angriff erkannt und einem unbefugten Dritten der Zugang zum Objekt verweigert werden.

Bei der mobilen Entriegelungsvorrichtung handelt es sich um eine bewegliche, d.h. transportable (z.B. tragbare) Vorrichtung, welche Signale zur Entriegelung des zu entriegelnden Objekts an dieses aussenden kann. Beispielsweise kann es sich bei der mobilen Entriegelungsvorrichtung um einen (Funk-) Schlüssel, ein mobiles Endgerät (z.B. Smartphone oder Tablet-Computer) oder einen Transponder (z.B. Radio-Frequency IDentification, RFID, Transponder) handeln.

Die mobile Entriegelungsvorrichtung weist ferner eine Kommunikationsvorrichtung auf, um über ein zellulares Netzwerk Signale auszusenden. Bei dem zellularen Netzwerk kann es sich z.B. um ein Mobilfunksystem handeln, das von entsprechenden Standardisierungsgremien, wie z.B. dem 3rd Generation Partnership Project, 3GPP, standardisiert wurde. Beispielsweise umfasst dies das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), System der fünften Generation (5G) oder auch Mobilfunksysteme anderer Standards.

Das Bestimmen 102 der Position der mobilen Entriegelungsvorrichtung erfolgt auf Basis des über das zellulare Netzwerk ausgesendeten Signals, d.h. netzwerkseitig. Beispielhaft sei hier nur das Uplink-Time Difference of Arrival (U-TDoA) Verfahren genannt, bei dem von mehreren Zeitmesseinheiten (engl. Location Measurement Unit, LMU) die Zeit bestimmt wird, die ein Signal von einem Sender zu jeweiligen Empfängern der mehreren Zeitmesseinheiten braucht. Aus den bestimmten Zeiten wird anschließend die Position des Senders bestimmt. Die mobile Entriegelungsvorrichtung kann z.B. eine Nachricht an ein Back-End senden. Das Senden einer beliebigen Nachricht ermöglicht die Lokalisierung über das Netzwerk.

Die Position des Objekts kann z.B. unter Verwendung eines globalen Navigationssatellitensystems (engl. Global Navigation Satellite System, GNSS) erfolgen. So können z.B. das Global Positioning System, GPS; das GLObal Navigation Satellite System, GLONASS; Galileo oder Beidou verwendet werden. Falls das Objekt über eine eigene Anbindung an ein Mobilfunknetz besitzt, kann alternativ die Position des Objekts auch über das Mobilfunksystem (z.B. mittels U-TDoA; Observed Time Difference of Arrival, OTDoA, oder enhanced Cell ID, eCID) oder eine Kombination beider Ansätze bestimmt werden.

Mittels der Lokalisierung der mobilen Entriegelungsvorrichtung über das Netzwerk sowie der bekannten Objektposition (z.B. GPS basiert, Zelle, etc.) kann durch das Verfahren 100 überprüft werden, ob sich die mobile Entriegelungsvorrichtung in einer dem normalen Gebrauch der mobilen Entriegelungsvorrichtung entsprechenden Entfernung zum Objekt befindet. Somit kann ein Risiko faktor für einen Angriff mittels Relaying reduziert werden.

Das Verfahren 100 kann daher z.B. ferner ein Feststellen der Autorisierung der mobilen Entriegelungsvorrichtung umfassen, wenn die Position der mobilen Entriegelungsvorrichtung einen Abstand zu der Position des zu entriegelnden Objekts aufweist, der kleiner als ein vorgegebener Abstand ist. Bei dem vorgegebenen Abstand kann es sich beispielsweise um einen dem normalen Gebrauch der mobilen Entriegelungsvorrichtung entsprechenden Abstand zum Objekt handeln. Der vorgegebene Abstand kann z.B. 1 Meter (m), 2 m, 3m, 5m, 10m, 15m, 20m, 25m oder mehr betragen.

Um eine möglichst flächendeckende Anwendbarkeit des Verfahrens 100 sicherzustellen (d.h. eine möglichst hohe Verfügbarkeit der Position der mobilen Entriegelungsvorrichtung zu ermöglichen), kann ein Signal mit niedriger Datenrate vorteilhaft sein. Daher kann das Signal beispielsweise eine Datenrate von weniger als 1,1 Mbit/s aufweisen.

Um einen Energiespeicher der mobilen Entriegelungsvorrichtung zu schonen, d.h. im Umkehrschluss eine Betriebsdauer der mobilen Entriegelungsvorrichtung zu verlängern, ist es vorteilhaft, das Signal möglichst energieeffizient über das zellulare Netzwerk auszusenden. Dazu kann das Signal dem NB-LTE-MTC Standard des 3GPP, dem NB-IoT Standard des 3GPP, dem LoRA Standard der LoRa Alliance oder dem SIGFOX Standard der Firma SIGFOX genügen. Dabei wird jeweils auf die zum Anmeldetag geltende Version des Standards Bezug genommen. Ein Senden mittels NB-IOT benötigt nach der Standardisierung des 3GPP etwa 150 mA. Dies kann z.B. eine lange Verfügbarkeit einer Batterie der mobilen Entriegelungsvorrichtung ermöglichen. Im Umkehrschluss kann auch die Verwendung eines möglichst kleinen Batteriepackages in der mobilen Entriegelungsvorrichtung ermöglicht werden.

Weiterhin ist es vorteilhaft, ein minimales Senden von Signalen über das zellulare Netzwerk bei einer gleichzeitig hohen Verfügbarkeit der Position der mobilen Entriegelungsvorrichtung zu ermöglichen. Dazu kann das Signal z.B. (nur) in Folge einer Kommunikation zwischen dem zu entriegelnden Objekt und der mobilen Entriegelungsvorrichtung ausgesendet werden. Mit anderen Worten: Die Kommunikation zwischen dem zu entriegelnden Objekt und der mobilen Entriegelungsvorrichtung, welche einen Entriegelungsversuch andeuten kann, kann somit als Trigger für das Aussenden des Signals über das zellulare Netzwerk dienen.

Um weitere Energie zu sparen, kann z.B. eine Kommunikationsvorrichtung (z.B. ein Sender oder ein Sendeempfänger nebst entsprechendem Applikationsprozessor) der mobilen Entriegelungsvorrichtung zur Kommunikation mit dem zellularen Netzwerk in Folge der Kommunikation zwischen dem zu entriegelnden Objekt und der mobilen Entriegelungsvorrichtung aus einem Zustand mit vermindertem Energieverbrauch in einen Betriebszustand versetzt wird. Mit anderen Worten: Die Kommunikationsvorrichtung kann sich für gewöhnlich in dem Zustand mit vermindertem Energieverbrauch (z.B. Power Save Mode, PSM, gemäß 3GPP Standardisierung) befinden und nur in Folge der Kommunikation zwischen dem zu entriegelnden Objekt und der mobilen Entriegelungsvorrichtung aus diesem geweckt werden.

Nach dem Aussenden des Signals über das zellulare Netzwerk kann die Kommunikationsvorrichtung entsprechend von dem Betriebszustand wieder in den Zustand mit vermindertem Energieverbrauch versetz werden, um Energie zu sparen.

Das zu entriegelnde Objekt kann beispielsweise ein Fahrzeug sein. Derart kann überprüft werden, ob sich der Fahrzeugschlüssel (als Beispiel einer mobilen Entriegelungsvorrichtung) z.B. in einer dem normalen Gebrauch des Funkschlüssels entsprechenden Entfernung zum Fahrzeug befindet. Bei Verwendung eines schlüssellosen Zugangssystems für das Fahrzeug kann beispielsweise die Kommunikation zwischen Fahrzeug und Schlüssel zur Autorisierung des Schlüssels als Trigger für das Aussenden einer Nachricht mittels NB-IOT an ein Back-End verwendet werden. Das Senden einer beliebigen Nachricht kann die Lokalisierung des Schlüssels über das Netzwerk ermöglichen. Anschließend kann die Entfernung des Schlüssels von der Position des abgestellten Fahrzeugs bestimmt werden (z.B. unter Ausnutzung der Positionsübertragung beim Abstellen des Fahrzeugs). Ist die Entfernung kleiner als die Reichweite des Funkschlüssels, kann die korrekte Nutzung des Schlüssels gegeben sein. Relay-Angriffe können somit verhindert werden.

Weist die Position der mobilen Entriegelungsvorrichtung (z.B. des Fahrzeugschlüssels) einen Abstand zu der Position des Fahrzeugs auf, der größer als ein vorgegebener Abstand ist, kann das Fahrzeug beispielsweise nicht entriegelt werden und/oder eine Mitteilung an einen Verantwortlichen für das Fahrzeug ausgegeben werden. Einem unbefugten Dritten kann somit der Zugang zum Fahrzeug verweigert werden bzw. der Verantwortliche für das Fahrzeug auf einen möglicherweise nicht-autorisierten Zugriffsversuch auf das Fahrzeug hingewiesen werden.

Allgemein können differenzierte Maßnahmen auf der Fahrzeugseite getroffen werden. Neben der vorgenannten Alarmierung bzw. Informationsübermittlung an einen Fahrer oder Fahrzeughalter des Fahrzeugs (z.B. Information/Alarmierung nur bei nächster Gelegenheit mittels Nachricht auf das Smartphone oder Handy, dass das Fahrzeug ohne Bestätigung der Position des Schlüssels geöffnet wurde oder ein Öffnen das Fahrzeugs verweigert wurde) bzw. dem Nicht-Öffhen des Fahrzeugs, können auch erweiterte Plausibilisierungsverfahren verwendet werden. So kann z.B. das Fahrzeug in einen Ortungsmodus versetzt werden, so dass die Fahrzeugposition kontinuierlich übertragen wird (z.B. an ein Back-End). Alternativ kann eine Kommunikation eines Back-Ends mit dem Fahrzeugschlüssel auf ein kurzes Intervall gestellt werden, um eine kontinuierliche Positionsbestimmung des Schlüssels zu ermöglichen. Auch kann z.B. eine kontinuierliche Plausibilisierung der Fahrzeugposition und der Schlüsselposition auf Übereinstimmung erfolgen. Wird ein Missbrauch festgestellt, kann wiederum ein Alarm, eine Information, etc. erfolgen. Auch können im Fahrzeug zusätzliche Autorisierungsverfahren aktiviert werden, wie etwa die Eingabe eine Codes (z.B. bei nicht eindeutigem Ergebnis aus dem Verfahren der Lokalisierung des Schlüssels).

Wenn das Bestimmen der Position der mobilen Entriegelungsvorrichtung auf Basis des Signals nicht möglich ist (z.B. weil kein NB-IoT Funknetz am Ort des Schlüssels verfügbar ist) oder der Vergleich der Position der mobilen Entriegelungsvorrichtung mit der Position des zu entriegelnden Objekts nicht eindeutig ist (z.B. weil die Lokalisierung über Netzwerk mit Ungenauigkeiten behaftet ist aufgrund einer prinzipiellen Unschärfe oder aufgrund von Signalreflexionen), kann das Verfahren 100 ferner ein Bestimmen einer Bewegungstrajektorie der mobilen Entriegelungsvorrichtung auf Basis zumindest zweier weiterer über das zellulare Netzwerk ausgesendeter Signale der mobilen Entriegelungsvorrichtung umfassen. Die zumindest zwei weiteren Signale wurden dabei zeitlich vor einem Zeitpunkt einer Kommunikation zwischen dem zu entriegelnden Objekt und der mobilen Entriegelungsvorrichtung ausgesendet. Ferner umfasst das Verfahren 100 ein Vergleichen der Bewegungstrajektorie der mobilen Entriegelungsvorrichtung mit der Position des zu entriegelnden Objekts. Mit anderen Worten: Ein Algorithmus zur Positionsbestimmung des Schlüssels kann in einigen Situation erweitert werden. Zur Plausibilisierung bzw. zum Ausgleich bei ungenügender Netzabdeckung (engl. coverage) kann zusätzlich eine Perlenkette der (vorangegangenen) Positionen der mobilen Entriegelungsvorrichtung bestimmt und ausgewertet werden.

Wenn ein Verlauf der Bewegungstrajektorie relativ zu der Position des zu entriegelnden Objekts einem vorgegebenen Kriterium genügt, kann das Verfahren 100 daher ferner ein Feststellen der Autorisierung der mobilen Entriegelungsvorrichtung umfassen. Bei dem Kriterium kann es sich um jegliche Entscheidungsregel oder Mehrzahl an Entscheidungsregeln handeln, die geeignet sind, einen Aufenthalt der mobilen Entriegelungsvorrichtung in der Nähe des zu entriegelnden Objekts anzuzeigen. Beispielsweise kann ein Verlauf der Bewegungstrajektorie auf das zu entriegelnde Objekt zu (inklusive eines gewissen Ungenauigkeitsbereichs um das Objekt herum) als Kriterium verwendet werden.

So kann z.B. beim Versuch des Öffnens eins Fahrzeugs mittels der letzten Position des Fahrzeugschlüssels aus der Perlenkette eine Plausibilisierung der Position gegenüber dem Fahrzeug durchgeführt werden. Bei einer nicht plausiblen oder nicht eindeutigen Position (z.B. unter Nutzung des Timestamps und der Position) des Schlüssels können geeignete Maßnahmen ergriffen werden. Beispielsweise kann zunächst das Öffnen des Fahrzeugs verhindert werden, um eine Bewegungstrajektorie des Fahrzeugschlüssels unter Nutzung der Perlenkette der Positionen des Schlüssels zu bestimmen und auszuwerten. Somit findet eine Analyse der Trajektorie der Schlüsselbewegung gegenüber der Fahrzeugposition statt.

Auch die weiteren Signale, die zur Bestimmung der Bewegungstrajektorie verwendet werden, können gemäß den oben genannten Grundsätzen energieeffizient durch die mobile Entriegelungsvorrichtung über das zellulare Netzwerk ausgesendet worden sein. So können beispielsweise die zumindest zwei weiteren Signale jeweils dem LTE-MTC Standard des 3GPP, dem NB-IoT Standard des 3GPP, dem LoRA Standard der LoRa Alliance oder dem SIGFOX Standard der Firma SIGFOX genügen.

Um eine möglichst hohe Verfügbarkeit der Position der mobilen Entriegelungsvorrichtung zu ermöglichen, kann beispielsweise wiederum eine Datenrate der Signale jeweils beschränkt sein (z.B. kleiner als 1,1 Mbit/s).

Das Verfahren 100 kann weiterhin ein Extrapolieren der Bewegungstrajektorie der mobilen Entriegelungsvorrichtung zu dem Zeitpunkt der Kommunikation zwischen dem zu entriegelnden Objekt und der mobilen Entriegelungsvorrichtung umfassen. Damit kann eine genauere Aussage darüber getroffen werden, ob sich die mobile Entriegelungsvorrichtung zum Zeitpunkt der Kommunikation mit dem zu entriegelnden Objekt tatsächlich in der Nähe dieses Objekts befindet. Relays-Angriffe können somit effektiver verhindert werden.

Auch kann das Verfahren 100 ein Aussenden einer Lokalisierungsnachricht an die mobile Entriegelungsvorrichtung mit einem Befehl, über das zellulare Netzwerk ein Signal auszusenden, umfassen. Somit kann z.B. von einem Back-End oder dem zellularen Netzwerk regelmäßig oder unregelmäßig die Position der mobilen Entriegelungsvorrichtung über das ausgesendete Signal bestimmt werden. Somit kann ermöglicht werden, dass ausreichend Positionsbestimmung für die Erstellung einer Bewegungstrajektorie vorliegen.

So kann das Verfahren z.B. ein mehrmaliges Aussenden der Lokalisierungsnachricht umfassen. Eine Häufigkeit des Aussendens der Lokalisierungsnachricht kann dabei beispielsweise von einer Position der mobilen Entriegelungsvorrichtung relativ zu der Position des zu entriegelnden Objekts und/oder einem Gradienten einer Änderung der Position der mobilen Entriegelungsvorrichtung und/oder einer absoluten Position der mobilen Entriegelungsvorrichtung abhängen. Bei einer großen Distanz zum Objekt (z.B. Fahrzeug) kann beispielsweise eine seltenere Übertragung veranlasst werden, um eine Batterie des mobilen Entriegelungsvorrichtung zu schonen. Die Änderung der Übertragungshäufigkeit abhängig von der Geschwindigkeit und/oder dem Ort bzw. der Distanz zum Objekt kann es beispielsweise ermöglichen, dass bei einer Annäherung an das Objekt zu einer Erhöhung der Frequenz der Übertragung kommt und damit mehr Positionspunkte für die Bestimmung der Bewegungstrajektorie der mobilen Entriegelungsvorrichtung zur Verfügung stehen. Ebenso kann derart ein Bewegungsmuster des Schlüssels festgestellt werden bzw. ein Ruhen des Schlüssels. Beispielsweise kann aus der absoluten Position und dem Gradienten der Änderung der Position der mobilen Entriegelungsvorrichtung festgestellt werden, dass die mobile Entriegelungsvorrichtung in einem Heimbereich abgelegt wurde und sich nicht am Körper eines vermeintlichen Fahrzeugführers befindet (wenn das Objekt ein Fahrzeug ist). Entsprechend kann festgestellt werden, dass ein Entriegelungsversuch des zu entriegelnden Objekts (z.B. Fahrzeug) durch einen nicht-autorisierten Dritten erfolgt und das Entriegeln des Objekts verweigert werden.

Wie vorangehend bereits angedeutet kann die Lokalisierungsnachricht beispielsweise mit einer ersten Häufigkeit ausgesendet werden, wenn ein Abstand der mobilen Entriegelungsvorrichtung von der Position des zu entriegelnden Objekts größer als ein Schwellwert ist. Wenn der Abstand der mobilen Entriegelungsvorrichtung von der Position des zu entriegelnden Objekts kleiner als der Schwellwert ist, kann die Lokalisierungsnachricht dann mit einer größeren zweiten Häufigkeit ausgesendet werden. Wenn das zu entriegelnde Objekt z.B. ein Fahrzeug ist, kann damit bei Annäherung an das Fahrzeug eine Erhöhung der Frequenz der Signalübertragung über das zellulare Netzwerk durch den Fahrzeugschüssel ermöglicht werden, um mehr Positionspunkte des Schlüssels für die Autorisierungsprüfung zu erhalten.

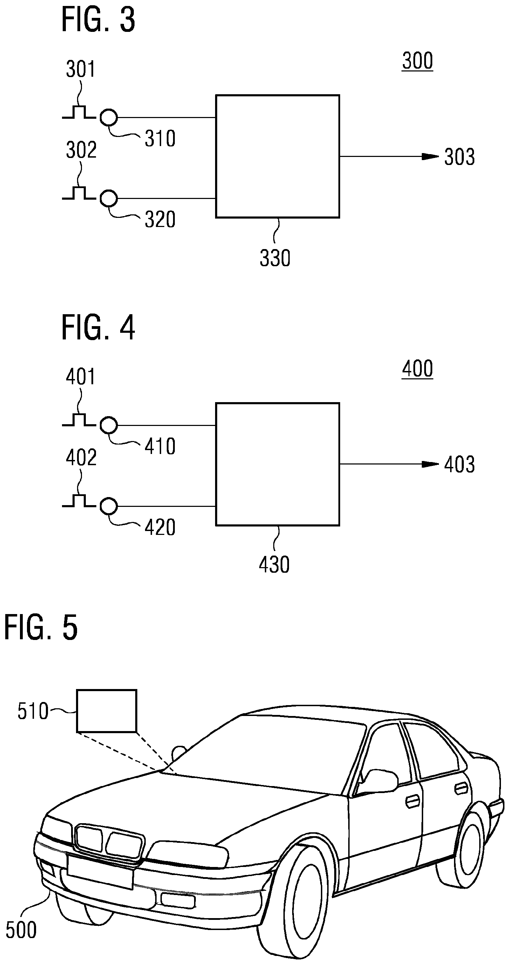

Weitere Details und Aspekte des Verfahrens 100 sind nachfolgend in Zusammenhang mit einem oder mehreren Ausführungsbeispielen (z.B. Fig. 2 und Fig. 3) beschrieben. Das Verfahren kann eines oder mehrere optionale Merkmale gemäß einem oder mehreren der nachfolgend beschriebenen Ausführungsbeispiele umfassen.

Ein weiteres Verfahren 200 zum Prüfen einer Autorisierung einer mobilen Entriegelungsvorrichtung ist in **Fig. 2** gezeigt. Das Verfahren 200 umfasst ein Bestimmen 202 einer Bewegungstrajektorie der mobilen Entriegelungsvorrichtung auf Basis zumindest zweier über ein zellulares Netzwerk ausgesendeter Signale der mobilen Entriegelungsvorrichtung. Ferner umfasst das Verfahren 200 ein Vergleichen 204 der Bewegungstrajektorie der mobilen Entriegelungsvorrichtung mit einer Position des zu entriegelnden Objekts.

Wie bereits in Zusammenhang mit dem in Fig. 1 gezeigten Verfahren 100 angedeutet, kann aus dem Vergleich der Bewegungstrajektorie mit der Position der mobilen Entriegelungsvorrichtung bestimmt werden, ob sich die mobile Entriegelungsvorrichtung z.B. innerhalb einer gewöhnlichen oder vorbestimmten Funkreichweite zum Fahrzeug befindet oder sich überhaupt auf das zu entriegelnde Objekt zu bewegt. Dadurch kann z.B. die Verlängerung der Funkreichweite bei einem Relay Angriff erkannt und einem unbefugten Dritten der Zugang zum Objekt verweigert werden.

Bei dem zu entriegelnden Objekt kann es sich z.B. wiederum um ein Fahrzeug handeln, während es sich bei der mobilen Entriegelungsvorrichtung z.B. um einen Fahrzeugschlüssel handeln kann. Entsprechend kann das Verfahren 200 dann daher eine Analyse der Trajektorie der Schlüsselbewegung gegenüber der Fahrzeugposition ermöglichen.

Das Verfahren 200 kann ferner ein Feststellen der Autorisierung der mobilen Entriegelungsvorrichtung umfassen, wenn ein Verlauf der Bewegungstrajektorie relativ zu der Position des zu entriegelnden Objekts einem vorgegebenen Kriterium genügt. Bei dem Kriterium kann es sich um jegliche Entscheidungsregel oder Mehrzahl an Entscheidungsregeln handeln, die geeignet sind, einen Aufenthalt der mobilen Entriegelungsvorrichtung in der Nähe des zu entriegelnden Objekts anzuzeigen. Beispielsweise kann ein Verlauf der Bewegungstrajektorie auf das zu entriegelnde Objekt zu (inklusive eines gewissen Ungenauigkeitsbereichs um das Objekt herum) als Kriterium verwendet werden.

Die zumindest zwei Signale können dabei jeweils wiederum dem LTE-MTC Standard des 3GPP, dem NB-IoT Standard des 3GPP, dem LoRA Standard der LoRa Alliance oder dem SIGFOX Standard der Firma SIGFOX genügen. Dadurch kann ein energieeffizientes Aussenden der Signale ermöglicht werden. Eine Batterie der mobilen Entriegelungsvorrichtung kann dadurch geschont werden.

In dem Verfahren 200 können die zumindest zwei weiteren Signale zeitlich vor einem Zeitpunkt einer Kommunikation zwischen dem zu entriegelnden Objekt und der mobilen Entriegelungsvorrichtung (z.B. um das zu entriegelnde Objekt zu entriegeln) ausgesendet worden sein. Dabei kann das Verfahren ferner ein Extrapolieren der Bewegungstrajektorie der mobilen Entriegelungsvorrichtung zu dem Zeitpunkt der Kommunikation zwischen dem zu entriegelnden Objekt und der mobilen Entriegelungsvorrichtung umfassen. Damit kann eine genauere Aussage darüber getroffen werden, ob sich die mobile Entriegelungsvorrichtung zum Zeitpunkt der Kommunikation mit dem zu entriegelnden Objekt tatsächlich in der Nähe dieses Objekts befand. Relays-Angriffe können somit besser verhindert werden.

Weitere Details und Aspekte des Verfahrens 200 sind in Zusammenhang mit einem oder mehreren Ausführungsbeispielen (z.B. Fig. 1 und Fig. 4) beschrieben. Das Verfahren kann eines oder mehrere optionale Merkmale gemäß einem oder mehreren der weiteren Ausführungsbeispiele umfassen.

Nachfolgend ist in **Fig. 3** noch ein Steuergerät 300 für ein Fahrzeug gezeigt. Das Steuergerät 300 umfasst eine erste Schnittstelle 310, die eingerichtet ist, ein erstes Entriegelungssignal 301 einer mobilen Entriegelungsvorrichtung zu empfangen. Ferner umfasst das Steuergerät eine zweite Schnittstelle 320, die eingerichtet ist, ein Autorisierungssignal 302 zu empfangen. Das Autorisierungssignal 302 basiert dabei auf einem Vergleich einer Position des Fahrzeugs mit einer Position der mobilen Entriegelungsvorrichtung. Das Steuergerät 300 umfasst weiterhin ein Logikelement 330, das eingerichtet ist, ein zweites Entriegelungssignal 303 für eine Verriegelungsvorrichtung des Fahrzeugs zu erzeugen, wenn das Autorisierungssignal 302 eine Autorisierung der mobilen Entriegelungsvorrichtung anzeigt.

Durch das Autorisierungssignal 302 kann angegeben werden, ob sich die mobile Entriegelungsvorrichtung z.B. innerhalb einer gewöhnlichen oder vorbestimmten Funkreichweite zum Objekt befindet. Dadurch kann z.B. die Verlängerung der Funkreichweite bei einem Relay Angriff angezeigt werden. Da das zweite Entriegelungssignal nur bei Empfang des ersten Entriegelungssignals von der mobilen Entriegelungsvorrichtung und bei einer angezeigten Autorisierung der mobilen Entriegelungsvorrichtung an die Verriegelungsvorrichtung des Fahrzeugs ausgegeben wird, kann einem unbefugten Dritten der Zugang zum Fahrzeug verweigert werden.

Das Logikelement 330 kann z.B. einen oder mehrere Prozessoren bzw. einen oder mehrere Prozessorkerne, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (engl. FPGA = Field Programmable Gate Array) aufweisen, auf dem Software für die Steuerung der Verriegelungsvorrichtung des Fahrzeugs gemäß den obigen Grundsätzen abläuft. Ferner kann das Logikelement 330 einen oder mehrere Speicher aufweisen, in denen z.B. die Software für die Steuerung der Verriegelungsvorrichtung des Fahrzeugs oder sonstige Daten gespeichert sein können.

Bei den Schnittstellen 310 und 320 kann es sich z.B. um Schnittstellen des Logikelements 330 handeln, die mit entsprechenden Empfangsvorrichtungen für das erste Entriegelungssignal 301 bzw. das Autorisierungssignal 302 gekoppelt sind.

Wie vorangehend angedeutet, kann die Position der mobilen Entriegelungsvorrichtung auf Basis eines über ein zellulares Netzwerk ausgesendeten Signals der mobilen Entriegelungsvorrichtung bestimmt sein. Dies kann eine energieeffiziente Positionsbestimmung der mobilen Entriegelungsvorrichtung ermöglichen.

Bei der Verriegelungsvorrichtung des Fahrzeugs kann es sich beispielsweise um eine Verriegelungsvorrichtung einer einzelnen Tür oder Klappe des Fahrzeugs handeln oder auch um eine Zentralverriegelungsvorrichtung des Fahrzeugs.

Bei der mobilen Entriegelungsvorrichtung handelt es sich um eine bewegliche, d.h. transportable (z.B. tragbare) Vorrichtung, welche Signale zur Entriegelung des Fahrzeugs an dieses aussenden kann. Beispielsweise kann es sich bei der mobilen Entriegelungsvorrichtung um einen (Funk-) Schlüssel, ein mobiles Endgerät (z.B. Smartphone oder Tablet-Computer) oder einen Transponder (z.B. Radio-Frequency IDentification, RFID, Transponder) handeln.

Weitere Details und Aspekte des Steuergeräts 300 sind vorangehend in Zusammenhang mit einem oder mehreren Ausführungsbeispielen (z.B. Fig. 1 oder Fig. 2) beschrieben. Das Steuergerät 300 kann eines oder mehrere optionale Merkmale gemäß einem oder mehreren der vorbeschriebenen Ausführungsbeispiele umfassen.

Ein weiteres Steuergerät 400 für ein Fahrzeug ist in **Fig. 4** gezeigt. Das Steuergerät 400 umfasst eine erste Schnittstelle 410, die eingerichtet ist, ein erstes Entriegelungssignal 401 einer mobilen Entriegelungsvorrichtung zu empfangen. Weiterhin umfasst das Steuergerät 400 eine zweite Schnittstelle 420, die eingerichtet ist, ein Positionssignal 402 zu empfangen. Das Positionssignal 402 zeigt dabei eine Position der mobilen Entriegelungsvorrichtung an, welche auf Basis eines über ein zellulares Netzwerk ausgesendeten Signals der mobilen Entriegelungsvorrichtung bestimmt ist. Ferner umfasst das Steuergerät 400 ein Logikelement 430, das eingerichtet ist, ein zweites Entriegelungssignal 403 für eine Verriegelungsvorrichtung des Fahrzeugs zu erzeugen, wenn die Position der mobilen Entriegelungsvorrichtung einen Abstand zu einer Position des Fahrzeugs aufweist, der kleiner als ein vorgegebener Abstand ist.

Durch das Positionssignal 402 kann bestimmt werden, ob sich die mobile Entriegelungsvorrichtung z.B. innerhalb einer gewöhnlichen oder vorbestimmten Funkreichweite zum Objekt befindet. Dadurch kann z.B. die Verlängerung der Funkreichweite bei einem Relay Angriff angezeigt werden. Da das zweite Entriegelungssignal nur bei Empfang des ersten Entriegelungssignals von der mobilen Entriegelungsvorrichtung und einem bestimmten Abstand der mobilen Entriegelungsvorrichtung vom Fahrzeug an die Verriegelungsvorrichtung des Fahrzeugs ausgegeben wird, kann einem unbefugten Dritten der Zugang zum Fahrzeug verweigert werden.

Das Logikelement 430 kann z.B. einen oder mehrere Prozessoren bzw. einen oder mehrere Prozessorkerne, einen ASIC, einen IC, ein SoC, ein programmierbares Logikelement oder ein FPGA aufweisen, auf dem Software für die Steuerung der Verriegelungsvorrichtung des Fahrzeugs gemäß den obigen Grundsätzen abläuft. Ferner kann das Logikelement 430 einen oder mehrere Speicher aufweisen, in denen z.B. die Software für die Steuerung der Verriegelungsvorrichtung des Fahrzeugs oder sonstige Daten gespeichert sein können.

Bei den Schnittstellen 410 und 420 kann es sich z.B. um Schnittstellen des Logikelements 430 handeln, die mit einer entsprechenden Empfangsvorrichtungen für das erste Entriegelungssignal 401 bzw. einem Bus des Fahrzeugs, um die Position des Fahrzeugs von einem weiteren Steuergerät des Fahrzeugs zu empfangen, gekoppelt sind.

Bei der Verriegelungsvorrichtung des Fahrzeugs kann es sich wiederum beispielsweise um eine Verriegelungsvorrichtung einer einzelnen Tür oder Klappe des Fahrzeugs handeln oder auch um eine Zentralverriegelungsvorrichtung des Fahrzeugs.

Die mobile Entriegelungsvorrichtung ist wiederum eine bewegliche, d.h. transportable (z.B. tragbare) Vorrichtung, welche Signale zur Entriegelung des Fahrzeugs an dieses aussenden kann.

Weitere Details und Aspekte des Steuergeräts 400 sind vorangehend in Zusammenhang mit einem oder mehreren Ausführungsbeispielen (z.B. Fig. 1) beschrieben. Das Steuergerät 400 kann eines oder mehrere optionale Merkmale gemäß einem oder mehreren der vorbeschriebenen Ausführungsbeispiele umfassen.

Ein Fahrzeug 500 mit einem Steuergerät 510 für ein Fahrzeug gemäß der vorgeschlagenen Architektur bzw. einem oder mehreren der vorbeschriebenen Ausführungsbeispiele ist in **Fig. 5** gezeigt. Ein Fahrzeug ist ein mobiles Verkehrsmittel für den Transport von Personen oder Gütern. Bei einem Fahrzeug kann es sich daher sowohl um ein Personen- als auch um ein Nutzfahrzeug handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die einen Motor, ein Antriebsstrangsystem sowie Räder umfasst. Das Steuergerät 510 kann ein nicht-autorisiertes Öffnen des Fahrzeugs 500 durch Dritte verhindern.

Ein Ausführungsbeispiel eines Verfahrens zum Prüfen einer Autorisierung einer mobilen Entriegelungsvorrichtung, umfasst Bestimmen einer Bewegungstrajektorie der mobilen Entriegelungsvorrichtung auf Basis zumindest zweier über ein zellulares Netzwerk ausgesendeter Signale der mobilen Entriegelungsvorrichtung; und Vergleichen der Bewegungstrajektorie der mobilen Entriegelungsvorrichtung mit einer Position des zu entriegelnden Objekts.

Ein Ausführungsbeispiel dieses Verfahrens umfasst ein Feststellen der Autorisierung der mobilen Entriegelungsvorrichtung, wenn ein Verlauf der Bewegungstrajektorie relativ zu der Position des zu entriegelnden Objekts einem vorgegebenen Kriterium genügt.

Gemäß einem Ausführungsbeispiel dieses Verfahrens, genügen die zumindest zwei Signale jeweils dem LTE-MTC Standard des 3rd Generation Partnership Project, dem NB-IoT Standard des 3rd Generation Partnership Project, dem LoRA Standard der LoRa Alliance oder dem SIGFOX Standard der Firma SIGFOX.

Gemäß einem Ausführungsbeispiel dieses Verfahrens, bei dem die zumindest zwei Signale zeitlich vor einem Zeitpunkt einer Kommunikation zwischen dem zu entriegelnden Objekt und der mobilen Entriegelungsvorrichtung ausgesendet wurden, umfasst das Verfahren ferner ein Extrapolieren der Bewegungstrajektorie der mobilen Entriegelungsvorrichtung zu dem Zeitpunkt der Kommunikation zwischen dem zu entriegelnden Objekt und der mobilen Entriegelungsvorrichtung.

Gemäß einem Ausführungsbeispiel dieses Verfahrens ist das zu entriegelnde Objekt ein Fahrzeug.

Gemäß einigen Ausführungsbeispielen entsprechen sämtliche der von der mobilen Entriegelungsvorrichtung ausgesendeten Signale jeweils dem LTE-MTC Standard des 3rd Generation Partnership Project, dem NB-IoT Standard des 3rd Generation Partnership Project, dem LoRA Standard der LoRa Alliance oder dem SIGFOX Standard der Firma SIGFOX.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen ASIC, einen IC, ein SoC, ein programmierbares Logikelement oder ein FPGA gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbaren Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahingehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahingehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zum Prüfen einer Autorisierung einer mobilen Entriegelungsvorrichtung, umfassend:
Bestimmen (102) einer Position der mobilen Entriegelungsvorrichtung auf Basis eines über ein zellulares Netzwerk ausgesendeten Signals der mobilen Entriegelungsvorrichtung, wobei das Signal dem NB-IoT Standard des 3rd Generation Partnership Project genügt, wobei die mobile Entriegelungsvorrichtung ein Smartphone ist, wobei das Signal in Folge einer Kommunikation zwischen dem zu entriegelnden Objekt und der mobilen Entriegelungsvorrichtung ausgesendet wird, und wobei eine Kommunikationsvorrichtung der mobilen Entriegelungsvorrichtung zur Kommunikation mit dem zellularen Netzwerk in Folge der Kommunikation zwischen dem zu entriegelnden Objekt und der mobilen Entriegelungsvorrichtung aus dem Power Save Mode gemäß dem NB-IoT Standard des 3rd Generation Partnership Project in einen Betriebszustand versetzt wird, wobei die Kommunikationsvorrichtung nach dem Aussenden des Signals über das zellulare Netzwerk von dem Betriebszustand wieder in den Power Save Mode gemäß dem NB-IoT Standard des 3rd Generation Partnership Project versetz wird;
Vergleichen (104) der Position der mobilen Entriegelungsvorrichtung mit einer Position des zu entriegelnden Objekts; und
Feststellen der Autorisierung der mobilen Entriegelungsvorrichtung, wenn die Position der mobilen Entriegelungsvorrichtung einen Abstand zu der Position des zu entriegelnden Objekts aufweist, der kleiner als ein vorgegebener Abstand ist,
wobei, wenn das Bestimmen der Position der mobilen Entriegelungsvorrichtung auf Basis des Signals nicht möglich ist oder der Vergleich der Position der mobilen Entriegelungsvorrichtung mit der Position des zu entriegelnden Objekts nicht eindeutig ist, das Verfahren ferner Folgendes umfasst:
Bestimmen einer Bewegungstrajektorie der mobilen Entriegelungsvorrichtung auf Basis zumindest zweier weiterer über das zellulare Netzwerk ausgesendeter Signale der mobilen Entriegelungsvorrichtung, wobei die zumindest zwei weiteren Signale zeitlich vor einem Zeitpunkt einer Kommunikation zwischen dem zu entriegelnden Objekt und der mobilen Entriegelungsvorrichtung ausgesendet wurden;
Vergleichen der Bewegungstrajektorie der mobilen Entriegelungsvorrichtung mit der Position des zu entriegelnden Objekts; und
Feststellen der Autorisierung der mobilen Entriegelungsvorrichtung, wenn ein Verlauf der Bewegungstrajektorie relativ zu der Position des zu entriegelnden Objekts einem vorgegebenen Kriterium genügt.

2. Verfahren nach Anspruch 1, wobei das Signal eine Datenrate von weniger als 1,1 Mbit/s aufweist.

3. Verfahren nach einem der vorhergehenden Ansprüche, wobei das zu entriegelnde Objekt ein Fahrzeug ist.

4. Verfahren nach Anspruch 3, wobei, wenn die Position der mobilen Entriegelungsvorrichtung einen Abstand zu der Position des Fahrzeugs aufweist, der größer als ein vorgegebener Abstand ist, das Fahrzeug nicht entriegelt wird und/oder eine Mitteilung an einen Verantwortlichen für das Fahrzeug ausgegeben wird.

5. Verfahren nach einem der vorhergehenden Ansprüche, ferner umfassend:
Extrapolieren der Bewegungstrajektorie der mobilen Entriegelungsvorrichtung zu dem Zeitpunkt der Kommunikation zwischen dem zu entriegelnden Objekt und der mobilen Entriegelungsvorrichtung.

6. Verfahren nach einem der vorhergehenden Ansprüche, ferner umfassend:
Aussenden einer Lokalisierungsnachricht an die mobile Entriegelungsvorrichtung mit einem Befehl, über das zellulare Netzwerk ein Signal auszusenden.

7. Verfahren nach Anspruch 6, ferner umfassend:
mehrmaliges Aussenden der Lokalisierungsnachricht, wobei eine Häufigkeit des Aussendens der Lokalisierungsnachricht von einer Position der mobilen Entriegelungsvorrichtung relativ zu der Position des zu entriegelnden Objekts und/oder einem Gradienten einer Änderung der Position der mobilen Entriegelungsvorrichtung und/oder einer absoluten Position der mobilen Entriegelungsvorrichtung abhängt.

8. Verfahren nach Anspruch 6 oder 7, wobei die Lokalisierungsnachricht mit einer ersten Häufigkeit ausgesendet wird, wenn ein Abstand der mobilen Entriegelungsvorrichtung von der Position des zu entriegelnden Objekts größer als ein Schwellwert ist, und wobei die Lokalisierungsnachricht mit einer größeren zweiten Häufigkeit ausgesendet wird, wenn der Abstand der mobilen Entriegelungsvorrichtung von der Position des zu entriegelnden Objekts kleiner als der Schwellwert ist.

## Claims

1. Method (100) for checking an authorisation of a mobile unlocking device, comprising:
determining (102) a position of the mobile unlocking device on the basis of a signal from the mobile unlocking device, transmitted via a cellular network, wherein the signal satisfies the NB-IoT standard of the 3rd Generation Partnership Project, wherein the mobile unlocking device is a smartphone, wherein the signal is transmitted as a result of communication between the object to be unlocked and the mobile unlocking device, and wherein a communication device of the mobile unlocking device is changed to an operating state from the Power Save Mode according to the NB-IoT standard of the 3rd Generation Partnership Project for communication with the cellular network as a result of the communication between the object to be unlocked and the mobile unlocking device, wherein the communication device is returned from the operating state to the Power Save Mode according to the NB-IoT standard of the 3rd Generation Partnership Project following the transmission of the signal via the cellular network;
comparing (104) the position of the mobile unlocking device with a position of the object to be unlocked; and
establishing the authorisation of the mobile unlocking device if the position of the mobile unlocking device is at a distance from the position of the object to be unlocked which is smaller than a predefined distance, wherein, if the determination of the position of the mobile unlocking device on the basis of the signal is not possible or the comparison of the position of the mobile unlocking device with the position of the object to be unlocked is not unambiguous, the method further comprises the following:
determining a movement trajectory of the mobile unlocking device on the basis of at least two further signals from the mobile unlocking device, transmitted via the cellular network, wherein the at least two further signals were transmitted chronologically before a time of a communication between the object to be unlocked and the mobile unlocking device;
comparing the movement trajectory of the mobile unlocking device with the position of the object to be unlocked; and
establishing the authorisation of the mobile unlocking device if a course of the movement trajectory relative to the position of the object to be unlocked satisfies a predefined criterion.

2. Method according to Claim 1, wherein the signal has a data rate of less than 1.1 Mb/s.

3. Method according to one of the preceding claims, wherein the object to be unlocked is a vehicle.

4. Method according to Claim 3, wherein, if the position of the mobile unlocking device is at a distance from the position of the vehicle which is greater than a predefined distance, the vehicle is not unlocked and/or a notification is output to a person responsible for the vehicle.

5. Method according to one of the preceding claims, further comprising:
extrapolating the movement trajectory of the mobile unlocking device at the time of the communication between the object to be unlocked and the mobile unlocking device.

6. Method according to one of the preceding claims, further comprising:
transmitting a location message to the mobile unlocking device with a command to transmit a signal via the cellular network.

7. Method according to Claim 6, further comprising: multiple transmission of the location message, wherein a frequency of the transmission of the location message depends on a position of the mobile unlocking device relative to the position of the object to be unlocked and/or a gradient of a change in the position of the mobile unlocking device and/or an absolute position of the mobile unlocking device.

8. Method according to Claim 6 or 7, wherein the location message is transmitted at a first frequency if a distance of the mobile unlocking device from the position of the object to be unlocked is greater than a threshold value, and wherein the location message is transmitted at a higher second frequency if the distance of the mobile unlocking device from the position of the object to be unlocked is smaller than the threshold value.

## Revendications

1. Procédé (100) de contrôle d'une autorisation d'un dispositif de déverrouillage mobile, comprenant :
la détermination (102) d'une position du dispositif de déverrouillage mobile sur la base d'un signal du dispositif de déverrouillage mobile transmis par l'intermédiaire d'un réseau cellulaire, dans lequel le signal respecte la norme NB-IoT du projet de partenariat de troisième génération, dans lequel le dispositif de déverrouillage mobile est un téléphone intelligent, dans lequel le signal est transmis à la suite d'une communication entre l'objet à déverrouiller et le dispositif de déverrouillage mobile, et dans lequel, pour communiquer avec le réseau cellulaire à la suite de la communication entre l'objet à déverrouiller et le dispositif de déverrouillage mobile, un dispositif de communication du dispositif de déverrouillage mobile est amené à passer du mode d'économie d'énergie conforme à la norme NB-IoT du projet de partenariat de troisième génération à un état de fonctionnement, dans lequel, après la transmission du signal par l'intermédiaire du réseau cellulaire, le dispositif de communication est ramené de l'état de fonctionnement au mode d'économie d'énergie conforme à la norme NB-IoT du projet de partenariat de troisième génération ;
la comparaison (104) de la position du dispositif de déverrouillage mobile à une position de l'objet à déverrouiller ; et
l'obtention de l'autorisation du dispositif de déverrouillage mobile lorsque la position du dispositif de déverrouillage mobile se trouve à une distance de la position de l'objet à déverrouiller qui est inférieure à une distance prédéterminée,
dans lequel, lorsque la détermination de la position du dispositif de déverrouillage mobile sur la base du signal n'est pas possible ou lorsque la comparaison de la position du dispositif de déverrouillage mobile à la position de l'objet à déverrouiller n'est pas unique, le procédé comprend en outre :
la détermination d'une trajectoire de déplacement du dispositif de déverrouillage mobile sur la base d'au moins deux autres signaux du dispositif de déverrouillage mobile transmis par l'intermédiaire du réseau cellulaire, dans lequel lesdits au moins deux autres signaux ont été transmis dans le temps avant un instant d'une communication entre l'objet à déverrouiller et le dispositif de déverrouillage mobile ;
la comparaison de la trajectoire de déplacement du dispositif de déverrouillage mobile à la position de l'objet à déverrouiller ; et
l'obtention de l'autorisation du dispositif de déverrouillage mobile lorsqu'une évolution de la trajectoire de déplacement par rapport à la position de l'objet à déverrouiller respecte un critère prédéterminé.

2. Procédé selon la revendication 1, dans lequel le signal présente un débit de données inférieur à 1,1 Mbps.

3. Procédé selon l'une des revendications précédentes, dans lequel l'objet à déverrouiller est un véhicule.

4. Procédé selon la revendication 3, dans lequel, lorsque la position du dispositif de déverrouillage mobile présente par rapport à la position du véhicule une distance qui est supérieure à une distance prédéterminée, le véhicule n'est pas déverrouillé et/ou un message est envoyé à une personne responsable dudit véhicule.

5. Procédé selon l'une des revendications précédentes, comprenant en outre :
l'extrapolation de la trajectoire de déplacement du dispositif de déverrouillage mobile à l'instant de la communication entre l'objet à déverrouiller et le dispositif de déverrouillage mobile.

6. Procédé selon l'une des revendications précédentes, comprenant en outre :
la transmission d'un message de localisation au dispositif de déverrouillage mobile avec une instruction pour transmettre un signal par l'intermédiaire du réseau cellulaire.

7. Procédé selon la revendication 6, comprenant en outre :
la transmission répétée du message de localisation, dans lequel une fréquence de la transmission du message de localisation dépend d'une position du dispositif de déverrouillage mobile par rapport à la position de l'objet à déverrouiller et/ou d'un gradient d'une variation de position du dispositif de déverrouillage mobile et/ou d'une position absolue du dispositif de déverrouillage mobile.

8. Procédé selon la revendication 6 ou 7, dans lequel le message de localisation est transmis avec une première fréquence lorsqu'une distance du dispositif de déverrouillage mobile par rapport à la position de l'objet à déverrouiller est supérieure à une valeur de seuil, et dans lequel le message de localisation est transmis avec une seconde fréquence plus élevée lorsque la distance du dispositif de déverrouillage mobile par rapport à la position de l'objet à déverrouiller est inférieure à la valeur de seuil.
